# EUROPEAN PATENT SPECIFICATION

(11) **EP 0 818 712 B1**
(45) Date of publication and mention of the grant of the patent: **01.08.2007**
(21) Application number: 97116775.4
(22) Date of filing: 16.11.1990
(51) Int. Cl.: G03G 5/02, G03G 15/22, G11B 9/08, G11B 11/08

(54) **Electrostatic information-recording media and process for recording and reproducing electrostatic information**
Medium für elektrostatische Datenspeicherung, sowie Verfahren zur Speicherung und zur Reproduzierung elektrostatischer Daten
Médium d'enregistrement d'information électrostatique et procédé pour l'enregistrement et la reproduction d'information électrostatique

(30) Priority: 17.11.1989 JP 29916589; 17.11.1989 JP 29916689; 12.03.1990 JP 6037490; 16.07.1990 JP 18754690
(43) Date of publication of application: 14.01.1998
(62) Divisional of application: 90916816.3
(73) Proprietor: DAI NIPPON PRINTING CO., LTD., Tokyo 162 (JP)
(72) Inventor: Utsumi, Minoru, c/o Dai Nippon Printing Co., Ltd., Shinjuku-Ku, Tokyo 162 (JP); Obata, Hiroyuki, c/o Dai Nippon Printing Co., Ltd, Shinjuku-Ku, Tokyo 162 (JP); Take, Seiji, c/o Dai Nippon Printing Co., Ltd., Shinjuku-Ku, Tokyo 162 (JP); Iijima, Masayuki, c/o Dai Nippon Printing Co., Ltd,, Tokyo 162 (JP); Kamiyama, Hironori, c/o Dai Nippon Printing Co., Ltd., Tokyo 162 (JP)
(74) Representative: Wilson Gunn

(56) References cited:
- EP-A- 0 327 236
- EP-A- 0 341 668
- DE-A- 2 034 239
- FR-A- 2 623 510
- US-A- 3 924 050
- US-A- 4 010 031

## Description

The present invention relates to an electrostatic information-recording medium which can electrostatically record information by an exposure process with the application of voltage or other processes and reproduce the information at any desired time. More particularly, this invention is directed to an electrostatic information-recording medium which is improved in terms of the capability to carry electrostatic information and a process for recording and reproducing the electrostatic information.

In electrophotography or other techniques so far known in the art, a photoconductive layer is vapour deposited on an electrode layer. After the photoconductive layer is electrically charged all over the surface, "image exposure" is carried out to cause some charges to leak out of the exposed region, thereby forming optically an electrostatic latent image thereon. A toner opposite in polarity to the residual charges is then deposited on the latent image, which is in turn electrostatically transferred onto paper, etc. for development According to these techniques which are mainly used for copying, the period of carrying electrostatic charges in the photoconductive layer serving as a recording medium is so reduced that toner development must be conducted just after the formation of the electrostatic latent image. Thus, they can never be used for, e.g. photographing because of their low sensitivity.

With TV photographing techniques, it is required to extract electrical image signals obtained in a pick-up tube and subjecting the resulting image to sequential line scanning for recording. Sequential line scanning is conducted with electron beams in the pick-up tube and with a magnetic head in the case of video recording. However, a problem with these techniques is that the resolution, depending upon the number of scanning lines, is much lower than that achieved with planar analogue recording such as silver photography.

This is also essentially true of recently developed TV image pickup systems making use of solid-state image sensors. A problem associated with these techniques are that the higher the quality and resolution of image recording, the more complicated the processing steps involved, or the more simplified the processing steps, the more likely it is that some memory function is lost or the quality of images degrades seriously.

This invention has for its object to improve the capability of an electrostatic information-recording medium to carry electrostatic information, and seeks to provide an electrostatic information-recording medium improved in terms of the capability to carry electrostatic information and a process for recording and reproducing electrostatic information with such a recording medium.

### DISCLOSURE OF THE INVENTION

According to the present invention, there is provided an electrostatic information-recording medium as claimed in claim 1 and a process for recording and reproducing electrostatic information as described in the appended claim 2.

The electrostatic information-recording medium is characterized in that said charge-retaining layer is obtained by the successive lamination of a fluoropolymer layer and a pentafluorostyrene polymer layer and having a weight-average molecular weight of 10,000 to 2,000,000 on said electrode layer.

According to the invention wherein a charge-retaining layer of an electrostatic information-recording medium is formed by the lamination of a fluoropolymer layer and a pentafluorostyrene polymer layer on at least an electrode layer, it is possible to obtain an electrostatic information-recording medium which is improved in terms of the capability to retain charges, esp., in terms of the capability of retain positive, charge information charges. High heat- and humidity-resistance that the fluoropolymer layer per se possesses also makes it possible to improve this recording medium further.

In other words, some fluoropolymer layers are less capable of retaining positive, charge information and the pentafluorostyrene layer per se is less capable of carrying charges as well. According to this aspect of the invention, however, it has been found that the capability of the recording medium to retain charges can be increased by laminating together the fluoropolymer and pentafluorostyrene polymer layers to form a charge-retaining layer.

For what reason the capability to retain charges is increased has still been unknown. However, it has been confirmed by the inventors that the pentafluorostyrene polymer layer has the physical properties of being improved in terms of the capability of retain charges upon heated at an elevated temperature. It is presumed that such physical properties play some role in the capability of the laminate to retain charges.

The process for recording and reproducing electrostatic information according to this aspect of the invention - wherein an electrostatic latent image corresponding to an exposure pattern is formed on the second electrostatic information-recording medium by locating it in opposite relation to a photosensitive member and exposing it to light with the application of voltage between both the electrodes or applying voltage between both the electrodes while it is exposed to light - can be used for planar analog recording. According to this process wherein the electrostatic information carried in the recording medium is accumulated in electrostatic charge unit, it is possible to record the information with high quality and resolution.

### BRIEF DESCRIPTION OF THE DRAWINGS

Fig. 1 is a diagrammatic sketch for illustrating the process for recording and reproducing electrostatic information according to the invention,
Fig. 2 is a diagrammatic sketch showing an example of a D.C. amplification type of potential reading system,
Fig. 3 is a diagrammatic sketch of how to record and reproduce electrostatic information,
Fig. 4 is .a sectional sketch of the electrostatic information-recording medium according to the present invention,
Fig. 5 is a graphic view for illustrating the capability of an electrostatic information-recording medium, prepared in Ex. 1, to carry charges.

### BEST MODE FOR CARRYING OUT THE INVENTION

The electrostatic information-recording medium according to the invention and the process for recording and reproducing electrostatic information with this recording medium will now be explained.

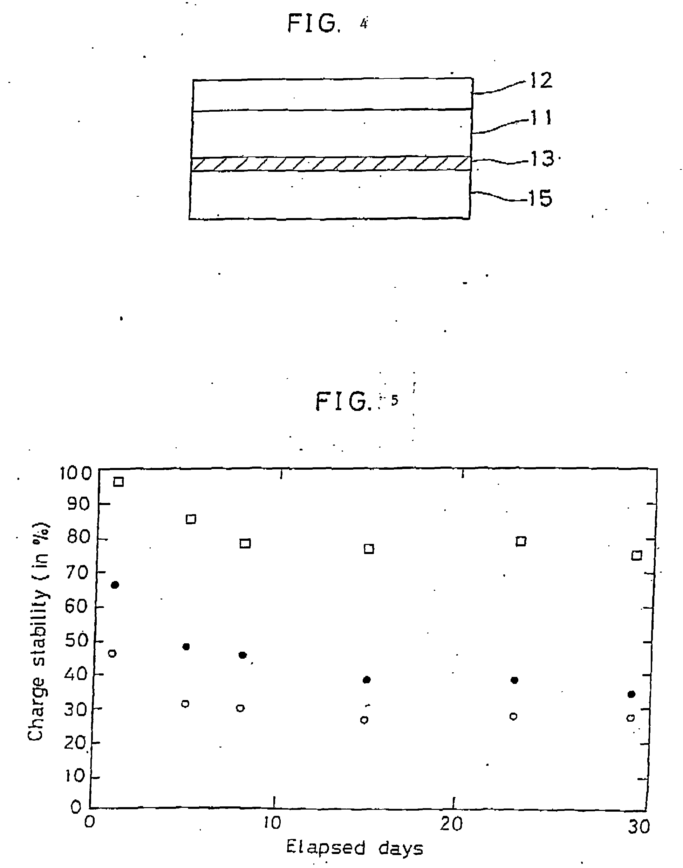

The electrostatic information-recording medium of the invention is shown in the sectional view presented as Fig. 4, wherein reference numeral 11 stands for a fluoropolymer layer, 12 a pentafluorostyrene polymer layer, 13 an electrode and 15 a support

The fluoropolymer layer 11 is formed of a fluoropolymer having an insulating property of 10¹⁴Ω·cm or more as expressed in terms of specific resistance.

As the fluoropolymers, for instance, use may be made of poly (tetrafluoroethylene) (PTFE), tetmfluomethylene-perfluoroalkyl vinyl ether copolymer (PFA), tetrafluoroethylene-hexafluoropropylene copolymer (FEP), tetrafluoroethylene-hexafuloropropylene-perfluoroalkyl vinyl ether copolymer (EPE), tetrafluoroethylene-ethylene copolymer (ETFE), poly(chlorotrifluoroethylene) (PCTFE) and chlorotrifluoroethylene-ethylene copolymer (ECTFE). In addition, these resins may be used in admixture with thermoplastic resin, thermosetting resin, radiation curing resin such as ultraviolet or electron beam curing resin or engineering plastics whose hydrogen atoms are partly or wholly substituted by fluorine atoms, or fluorine-containing resins.

Preferably, use may also be made of the following fluorine-containing resins: Fluorine-containing thermoplastic resin comprising a cyclic recurring unit (units) represented by the following general formulae: 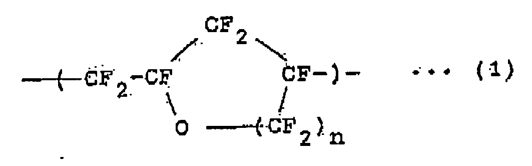 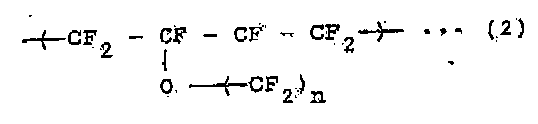 wherein n is 1 or 2, and having such a molecular weight as to give an intrinsic viscosity of at least 0.1 at 50° C, or Fluorine-containing thermoplastic resin comprising (a) a cyclic recurring unit (units) represented by the following general formulae: 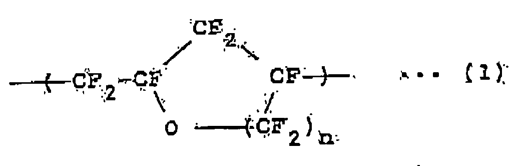 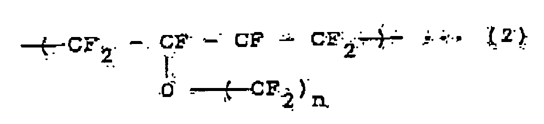 wherein n is 1 or 2, and (b) a recurring unit represented by the following general formula:

-(CF₂-CFX)- (3)

wherein X is F, Cl, -O-CF₂CF₂CF₃, -O-CF₂CF(CF₃)OCF₂CF₂SO₃F or -O-CF₂CF₂CF₂COOCH₃, with the content of the recurring unit (a) being at least 80%, and having such a molecular weight as to give an intrinsic viscosity of at least 0.1 at 50° C.

The recurring unit (a) is obtained by the radically cyclic polymerization of a perfluoroalkyl vinyl ether expressed by the following general formula: CF₂=CF-O-(CF₂)ₙCF=CF₂ wherein n is 1 or 2, or perfluorobutenyl vinyl ether. Similarly, the resins comprising the recurring units (a) and (b) are obtained by the radical polymerization of a perfluorovinyl ether having the following general formula:

CF₂=CF-O-(CF₂)ₙCF=CF₂

wherein n is 1 or 2 with a monomer having the following general formula: CF₂=CFX wherein X is F, Cl, -O-CF₂CF₂CF₃, -O-CF₂CF(CF₃)OCF₂CF₂SO₃F or -O-CF₂CF₂CF₂COOCH₃.

These resins, for instance, are referred to in Japanese Provisional Patent Publication No.1(1989)-131215.

A layer of such a fluoropolymer may be laminated on the electrode layer by coating or dipping of a solution of the fluoropolymer dissolved in a fluorine type of solvent. Alternatively, a fluoropolymer film may be applied on the electrode through an adhesive or the like. Further, an electrode-forming material may be laminated on one side of the fluoropolymer film by means of vapor deposition, etc., while a pentafluorostyrene polymer layer may be coated on the other side.

The fluoropolymer layer may preferably have a thickness of 0.1 to 5µm.

The pentafluorostyrene polymer layer to be laminated on the fluoropolymer layer is obtained by the radical polymerization of pentafluorostyrene (C₆F₅-CH=CH₂).

Alternatively, the pentafluorostyrene polymer layer may be formed of a copolymer of pentafluorostyrene with such a comonomer as CnF₂ₙ₊₁-CH=CH₂ or CnF₂ₙ₊₁-CF=CF₂ wherein n stands for an integer of 5-10), or CF₂=CF-C₆H₅. This copolymer is then obtained by the radical, anionic or cationic polymerization of 100-1% by weight of pentafluorostyrene with 0-99% by weight of the comonomer.

When the pentafluorostyrene polymer cannot be coated on the above-mentioned fluoropolymer layer, the fluoropolymer may be treated on the surface by plasma or other means to increase the capability to be coated prior to providing the pentafluorostyrene polymer.

In view of its moldability and solubility in solvents, the pentafluorostyrene polymer used has a molecular weight of 10,000 to 2,000,000.

For the lamination of the pentafluorostyrene polymer layer, a solution of the pentafluorostyrene polymer dissolved in a fluorine type of solvent may be provided on the above-mentioned fluoropolymer layer by coating or dipping.

The pentafluorostyrene polymer layer may have a thickness of 0.1µm to 5µm, but should preferably be thinner than the fluoropolymer layer.

It is noted that in order to improve the stability of charges, these fluoropolymer and pentafluorostyrene polymer layers may additionally contain photoconductive and electrically conductive materials in an ultrafine form.

The electrode of the electrostatic information-recording medium, which is not critical with the exception that it has a specific resistance value of 10⁶Ω·cm or less, may be formed of electrically conductive films of inorganic metals or inorganic metal oxides, or of such organic materials as quaternary ammonium salts. Such electrodes may be formed by suitable procedures such as vapor deposition, sputtering, CVD, coating, plating, dipping and electrolytic polymerization.

The thickness of the electrode should be varied depending upon the electrical properties of the material forming it and the magnitude of voltage applied for recording information. For instance, an aluminium electrode may be about 0.01 to 0.3µm (100 to 3000 angstrom) in thickness, and be formed between the support and the charge-retaining layer over all the surfaces or according to the pattern of the charge-retaining layer formed. When the charge-retaining layer is formed of a film material having a certain strength in itself, such an electrode material as mentioned above may be formed on that film material by means of vapor deposition or the like.

A support 15 is not critical in terms of material and thickness, if it has enough strength to support the recording medium well. For instance, use may be made of flexible plastic films, metal foils or paper, or rigid glass, plastic or metal sheets (which may also serve as an electrode). When the recording medium is in the form of a flexible film, tape or disk, on the one hand, a flexible plastic film may be used and when the recording medium is required to have strength, on the other hand, a rigid sheet or an inorganic material such as glass may be used. It is noted that such a support can be dispensed with, if the charge-retaining layer is formed of a film material having a certain strength in itself.

It is understood that after recording information, the electrostatic information-recording medium may be provided on the surface with a protective plastic film to protect it against surface failure or attenuation of the information-carrying charges stored. For the same purpose, a plastic solution may be coated or otherwise vapor-deposited on the surface of that medium. The protecting film may be a few hundreds angstroms to a few tens µm in thickness, at which the reproduction of information can be well achieved.

When it is required to impart photosensitivity to the electrostatic information-recording medium at the same time, the fluoropolymer and pentafluorostyrene polymer layers may be successively provided on the photoconductive layer formed on the electrode.

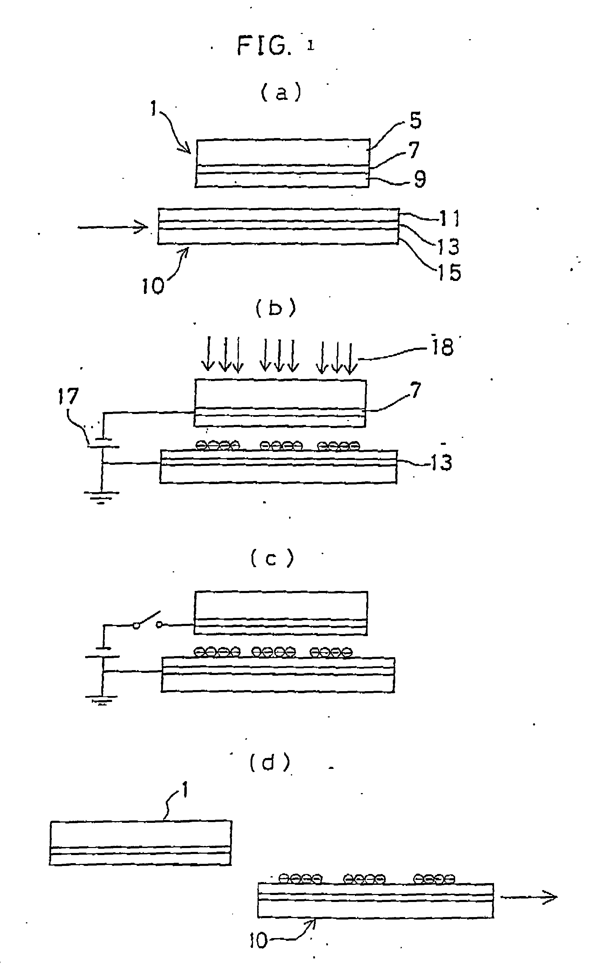

The recording and reproduction of information with electrostatic information-recording medium may be carried out, as illustrated in Fig. 1, wherein reference numeral 1 is a photosensitive member, 5 a support for a photoconductive layer, 7 an electrode formed in the photosensitive member, 9 a photoconductive layer and 17 a power source.

The photosensitive member, for instance, is formed by providing an about 10-µm thick, organic photoconductive layer 9 on the surface of a 0. 1 µm (1000 angstrom) thick, ITO transparent electrode layer 7 formed on a 1-mm thick glass support 5.

As shown in Fig. 1a, an electrostatic information-recording medium is first located with respect to the photosensitive member 1 through a gap of about 10µm.

Then, voltage is impressed through the power source 17 between the electrodes 7 and 13. In the dark, there will be no change between the electrodes due to the photoconductor 9 being a high resistance body, if the voltage applied to the gap is less than the firing voltage following the Paschen's law.

Upon incidence of light 18 through the electrostatic information-recording medium, a portion of the photoconductor 9, on which the light impinges, is made so electrically conductive that the recording medium discharge and accumulates thereon information-retaining charges. It is understood that the light 18 may be allowed to be incident upon the photoconductor 9 through the photosensitive member 1.

Then, the power source 17 is put off to separate the recording medium 10 from the photosensitive member 1 (see Fig 1d). In this manner, the formation of an electrostatic latent image is completed.

When this process for recording and reproducing electrostatic information is used for planar analog recording, the obtained resolution is as high as that achieved with silver photography, and the information-retaining charges are protected in the charge-retaining layer and stored over an extended period without discharging.

Reference will now be made to how to input information to this electrostatic information-recording medium. This may be achieved with an electrostatic camera or laser. Referring first to the electrostatic camera, a recording member constructed from a photosensitive material and the electrostatic information-recording medium is used in place of a photographic film, The shutter used may be of either the mechanical or the electrical type.

A color filter may also be used to separate optical information into R G and B components through a prism and extract them as parallel beams. For color photographing, one frame may then be formed either by three sets of electrostatic information-recording media separated into the R, G and B colors or by a set of R, G and B images arranged on one plane.

For laser recording systems, argon laser (514,488 nm), helium-neon laser (633 nm) or semiconductor laser (780 nm, 810 nm) may be used as the light source. Voltage is then applied, while the photosensitive member is brought in close, planar contact with or in opposition to the electrostatic information-recording medium at a constant interval. In this case, the electrode may be of the same polarity as that of the carrier of the photosensitive member. In that state, laser exposure corresponding to picture image, character, cord or line signals is carried out by scanning. Analogue recording of information such as picture images is made by the modulation of the intensity of laser light, while digital recording of characters, cords or line pictures is done by the on-off control of laser light. Dotted imaging may also be carried out under the dot generator on-off control of laser light. It is noted that the spectral properties of the photoconductive layer in the photosensitive member need not be panchromatic, and may be well sensitive to the wavelength of the laser light source.

This electrostatic information-recording medium may be used as an electrostatic recording medium using an electrode needle or ion-flow head, an optical printer such as a laser printer, or a recording medium making use of electron beam or ion impinging. In particular, this is best-suited for an electrostatic information-recording medium using a photosensitive member.

Reference will now be made to how to reproduce the thus recorded electrostatic information.

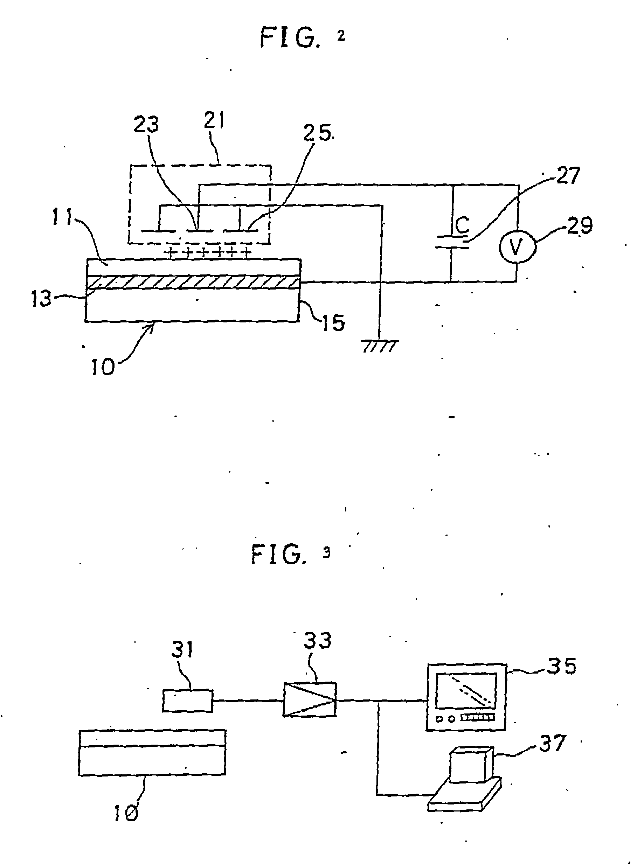

An example of reading potential in reproducing electrostatic information is illustrated in Fig. 2. It is noted that reference numeral 10 stands for an electrostatic information-recording medium, 21 a potential reader, 23 a detecting electrode, 15 a guard electrode, 27 a capacitor and 29 a voltmeter.

In order to reproduce the information from the electrostatic information-recording medium on which the information-carrying charges have been accumulated, the potential reader 21 is first located in opposition to the surface of the charge-retaining layer. Then, an electric field established by the charges accumulated on the charge-retaining layer acts on the detecting electrode 23, inducing on the surface of the detector 23 charges in the same amount of those on the recording medium. Since the capacitor 27 is charged with charges opposite in polarity to such induced charges, there is a potential difference corresponding to the accumulated charges across the capacitor's electrode, which can be in turn read on the voltmeter 29, thereby determining the potential of the charge-retaining information. Then, an electrostatic latent image can be produced in the form of electrical signals by scanning the surface of the charge-retaining layer with the reader 21. It is noted that only with the detector 23, there is a drop of resolution due to the action of an electric field (an electric line of force) defined by charges over a range wider than the region of the recording medium opposite to the detecting electrode; hence, the guard electrode 25 may be grounded around the detecting electrode. According to such an arrangement in which the electric line of force acts vertically to a plane, it is possible to read the potential of a region having an area nearly equal to that of the detecting electrode. Since the accuracy and resolving power of potential reading vary largely depending upon the geometry and size of the detecting and guard electrodes as well as the space between them and the electrostatic information-recording medium, it is essentially required to design them while taking into account the optimum conditions to meet the performance demanded.

Fig. 3 is a schematic view showing the process for reproducing electrostatic information, with reference numeral 31 indicating a potential reader, 33 an amplifier, 35 a CRT and 37 a printer.

Referring to this drawing, a charge potential is detected by the potential reader 31, and the resulting output is amplified by the amplifier 33 for display on the CRT 35 or printing-cut with the printer 37. In this case, the region to be read may be arbitrarily selected and outputted at any desired time, or may be repeatedly reproduced. Reading may also be optically achieved with a material whose optical properties vary by an electric field, for instance, an electrooptical crystal. Since the electrostatic latent image is obtained in the form of electrical signals, it may further be recorded in other recording media, if required.

In what follows, the electrostatic information-recording medium according to the invention and how to record and reproduce electrostatic information with this recording medium will be explained specifically but not exclusively with reference to the following examples.

### Example of Polymer Manufacture

Forty (40) g of pentafluorostyrene (made by Central Yakuhin K.K.) purified by distillation under reduced pressure (48°C/20mmHg) and 0.06 g of azobisisobutyronitrile were placed in an ampule made of pressure-resistant glass, in which they were frozen and degasified twice. After that, pentafluorostyrene was radically polymerized in a warm bath of 60°C for 24 hours to obtain a polymer.

After the polymer had been dissolved in perfluorobenzene, the solution was poured in a large amount of methanol to obtain precipitates, which were then re-precipitated in a similar system to obtain precipitates. The precipitates were recovered and dried under vacuum to obtain a pentafluorostyrene polymer in an amount of 38 g (or in a 95 % yield).

This polymer was found to have a glass transition temperature of 108°C, as measured by thermal analysis and a weight-average molecular weight of 250,000 calculated as polystyrene, as determined by GPC.

### Example 1

An ITQ electrode layer was deposited on a 1-mm thick glass substrate at a thickness of 1000 angstroms by vacuum vapor deposition (10⁻⁵ Torr). Coated on this electrode was a 7% by weight solution of a fluorine-containing resin ("Cytop" made by Asahi Glass Co., Ltd. and having a water absorption of 0.01 % and a specific resistance value of 1 x 10¹⁸Ω-cm) dissolved in perfluoro (2-butyltetrahydrofuran) by a blade coater, followed by 3-hour air drying. After that, the product was heated at 150°C for 1 hour for the lamination of a fluoropolymer layer of about 2µm in thickness.

Coated on the fluoropolymer layer was a 4% by weight solution of polypentafluorostyrene in 1,3-ditrifluoromethyl-benzene by spin coating (at 2000 rpm for 20 seconds), followed by 3-hour air drying. ,After that, the product was heated at 150°C for 1 hour to prepare an electrostatic information-recording medium having a charge-retaining layer at a total thickness of 3µm.

The thus obtained recording medium was charged thereon to a surface potential of+/-120V by a corona charger.

After this electrostatic information-recording medium had been allowed to stand at normal temperature and humidity for 30 days, the surface potential was found to be maintained at +/-115V. Even after allowed to stand at 60°C and 25% R.H. over a period of 30 days, the surface potential was found to be kept at +90V, and even after allowed to stand under high humidity conditions of 95% R.H. at 40°C over a period of 30 days, the surface potential was found to be held at +113V.

It is noted that in Fig. 5, there is shown how the stability of plus charges retained in the electrostatic information-recording medium changed with the lapse of time, while it was held at 60°C and 25% R.H.

As can be appreciated from this diagram, the electrostatic information-recording medium (□) formed by laminating a polypentafluorostyrene layer on a fluoropolymer layer is superior in the capability to carry charges under high temperature conditions to a medium consisting only of either a fluoro-polymer layer (O) or a polypentafluorostytene layer (•).

### Example 2

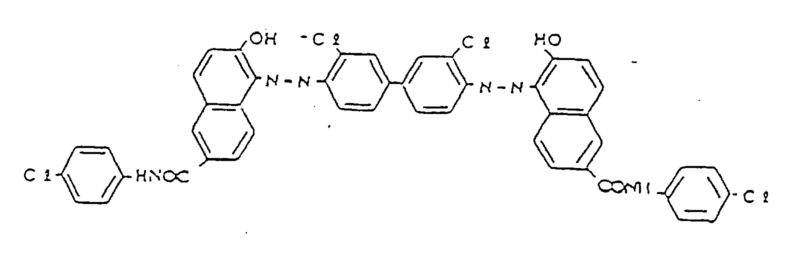

A 100-g solution - having a solid content of 2% - of 3 parts of a bis-azo type of pigment having the above-mentioned structural formula and 1 part of polyvinyl acetal resin - both serving as charge-generating materials - dissolved in a mixed solvent consisting of dioxane and cyclohexane at 1:1 was well dispersed in a ball mill to prepare a dispersion, which was then coated on the surface of an ITO transparent electrode layer (having a thickness of about 500 angstroms and a resistance value of 80Ω/□) formed on a glass substrate with the use of a 2-mil gap blade coater. Subsequent 1-hour drying at 100°C gave a charge-generating layer of 0.3 µm in thickness.

Then, 15 parts of P-diethylaminobenzaldehyde-N-phenylbenzylhydrazone and 10 parts of a polycarbonate resin ("Yupiron S-100" made by Mitsubishi Gas Chemical Co., Ltd.) - both serving as charge-transporting materials - were used with a mixed solvent consisting of dichloromethane and 1,1,2-trichloroethane at 4:6 to prepare a solution having a solid content of 17.8 %, which was in turn coated on the above-mentioned charge-generating layer with the use of a 2-mil gap blade coater. Subsequent 2-hour drying at 80°C gave a charge-transporting layer of 10µm in thickness, thereby preparing an organic photosensitive member.

While the surface of the electrostatic information-recording medium prepared in Ex. 1 was located in opposition to the surface of the photoconductive layer of the above-mentioned photosensitive member using a 10-µm thick polyester film as a spacer, both the photosensitive member and the recording medium were setted. Then, a D.C. voltage of 750V was applied between both the electrodes with the photosensitive member and the resin layers kept positive and negative, respectively.

With the voltage applied, the electrostatic information-recording medium was exposed through the photosensitive member to light emanating from a halogen lamp light source at a luminous intensity of 1000 luxes for 0.1 second, thereby forming an electrostatic latent image on the recording medium.

Then, a potential difference between the electrode and the surface of the recording medium was measured with a surface potentiometer shown in Fig. 2 ("Treck Model 344). As a result, the recording medium was found to have a surface potential of +100V, but the unexposed region was found to have a surface potential of 0 V.

### INDUSTRIAL APPLICABILITY

The electrostatic information-recording media and processes for recording and reproducing electrostatic information according to this invention are applicable to fields relating to electrostatic information recording.

## Claims

1. An electrostatic information-recording medium comprising a support (15), an electrode layer (13) and a charge-retaining layer, and a fluoropolymer layer (11) on said electrode layer, **characterized in that** said charge-retaining layer is a pentafluorostyrene polymer layer (12) laminated on said fluoropolymer layer and having a weight-average molecular weight of 10,000 to 2,000,000.

2. A process for recording and reproducing electrostatic information, **characterized by**:
locating a photosensitive member (1) including a photoconductive layer (9) on an electrode layer (7) in opposite and contact or non-contact relation to an electrostatic information-recording medium according to claim 1, and
forming an electrostatic charge pattern on said recording medium by exposing said recording medium to light with the application of voltage between both said electrodes (7) and (13) or applying voltage between both said electrodes while said recording medium is exposed to light through the photosensitive member (1)

## Patentansprüche

1. Elektrostatisches Informationsaufzeichnungsmedium, umfassend eine Auflage (15), eine Elektrodenschicht (13) und eine Ladungshalteschicht und eine Fluorpolymerschicht (11) auf der Elektrodenschicht, **dadurch gekennzeichnet, dass** die Ladungshalteschicht eine auf die Fluorpolymerschicht laminierte Pentafluorstyrol-Polymerschicht (12) ist und ein gewichtetes mittleres Molekulargewicht von 10 000 bis 20 000 hat.

2. Verfahren zum Aufzeichnen und Wiedergeben von elektrostatischen Informationen, **gekennzeichnet durch**:
Anordnen eines fotoempfindlichen Elements (1), das eine fotoleitende Schicht (9) enthält, auf einer Elektrodenschicht (7), gegenüberliegender und Kontakt- oder Nichtkontakt-Beziehung zu einem elektrostatischen Aufzeichnungsmedium nach Anspruch 1,
Ausbilden eines elektrostatischen Ladungsmusters auf dem Aufzeichnungsmedium **durch** Aussetzen des Aufzeichnungsmediums gegenüber Licht mit dem Anlegen von Spannung zwischen beiden Elektroden (7) und (13) oder mit dem Anlegen von Spannung zwischen beiden Elektroden, während das Aufzeichnungsmedium **durch** das fotoempfindliche Element (1) Licht ausgesetzt wird.

## Revendications

1. Support d'enregistrement d'informations électrostatiques comprenant un support (15), une couche d'électrode (13) et une couche de rétention de charge, et une couche de fluoropolymère (11) sur ladite couche d'électrode, **caractérisé en ce que** ladite couche de rétention de charge est une couche de polymère de pentafluorostyrène (12) laminée sur ladite couche de fluoropolymère et ayant une masse moléculaire moyenne comprise entre 10 000 et 2 000 000.

2. Procédé d'enregistrement et de reproduction d'informations électrostatiques, **caractérisé par**:
la localisation d'un élément photosensible (1) comprenant une couche photoconductrice (9) sur une couche d'électrode (7) en relation opposée et de contact ou de non contact avec un support d'enregistrement d'informations électrostatiques selon la revendication 1, et
la formation d'une configuration de charge électrostatique sur ledit support d'enregistrement en exposant ledit support d'enregistrement à la lumière avec l'application d'une tension entre lesdites deux électrodes (7) et (13) ou en appliquant une tension entre lesdites deux électrodes tandis que ledit support d'enregistrement est exposé à la lumière par l'intermédiaire de l'élément photosensible (1).
